# FASCICULE DE BREVET EUROPEEN

(11) **EP 1 437 260 B1**
(45) Date de publication et mention de la délivrance du brevet: **22.03.2006**
(21) Numéro de dépôt: 04290027.4
(22) Date de dépôt: 07.01.2004
(51) Int. Cl.: B60R 1/072

(54) **Rétroviseur pour véhicule comportant un miroir monté pivotant sur deux axes perpendiculaires**
Auf zwei Achsen rotierbarer Fahrzeugaussenrückspiegel
Rear-view vehicle mirror pivotable on two axes

(30) Priorité: 13.01.2003 FR 0300298
(43) Date de publication de la demande: 14.07.2004
(73) Titulaire: Schefenacker Vision Systems France, 77191 Dammarie-Les-Lys Cedex (FR)
(72) Inventeur: Dumont, Daniel, 77250 Veneux-les-Sablons (FR); Duroux, Bernard, 78890 Garancières (FR)
(74) Mandataire: Lemoine, Robert

(56) Documents cités:
- FR-A- 2 385 137
- US-A- 4 101 206
- US-A- 4 116 538
- US-A- 6 164 148

## Description

La présente invention concerne un rétroviseur pour véhicule, notamment pour automobile, comprenant un boîtier comportant une entrée fermée par un miroir, des premiers moyens d'entrainement pour faire pivoter le miroir sur un premier axe, des seconds moyens d'entraînement pour faire pivoter ledit miroir sur un second axe perpendiculaire au premier axe, et un moteur électronique pour entraîner sélectivement en rotation les premier et second moyens d'entraînement.

FR 2 385 137 décrit un rétroviseur selon le préambule de la revendication 1. US 6 164 148 décrit un rétroviseur de ce type, dont le miroir peut pivoter sur deux axes perpendiculaires sous la commande d'un mécanisme comprenant un moteur électrique unique 14, une première vis sans fin 21 prévue sur l'arbre de sortie 15 du moteur électrique 14, une première roue à vis 22 engrenant avec la première vis sans fin 21, deux deuxièmes vis sans fin 31, 41 situées de part et d'autre de la première roue à vis 22, et deux roues à vis 32, 42 engrenant respectivement avec les deuxièmes vis sans fin 31, 41.

US 4 101 206 décrit également un rétroviseur comportant un moteur électrique unique 7 pour faire pivoter le miroir sur deux axes perpendiculaires, le moteur 7 faisant partie d'un mécanisme de commande comprenant un embrayage actionné par électromagnétisme et deux ensembles de transmission planétaires 11, 12.

Les mécanismes de commmande du miroir des rétroviseurs décrits dans les deux documents précités sont complexes, coûteux et difficiles à installer en raison des faibles dimensions du logement prévu pour les recevoir.

La présente invention se propose de remédier à ces inconvénients et, pour ce faire, elle a pour objet un rétroviseur ayant la structure indiquée au premier paragraphe ci-dessus et qui est caractérisé en ce que les premiers moyens d'entraînement comprennent de préférence un premier élément cylindrique monté à rotation et comportant une première rampe définissant une boucle fermée ayant un point haut et un point bas situés dans deux positions diamétralement opposées, et deux premiers organes suiveurs portés chacun par une patte faisant saillie sur la face arrière du miroir, ces premiers organes suiveurs prenant appui sur la première rampe en deux emplacements situés dans des positions diamétralement opposées et se déplaçant sur ladite première rampe lorsque le premier élément cylindrique est entraîné en rotation par l'organe moteur.

Le rétroviseur selon la présente invention est également caractérisé en ce que les seconds moyens d'entraînement comprennent de préférence un second élément cylindrique monté à rotation et comportant une seconde rampe définissant une boucle fermée ayant un point haut et un point bas situés dans deux positions diamétralement opposées, et deux seconds organes suiveurs portés chacun par une patte faisant saillie sur la face arrière du miroir, ces seconds organes suiveurs prenant appui sur la deuxième rampe en deux emplacements situés dans des positions diamétralement opposées, se déplaçant sur ladite seconde rampe lorsque le second élément cylindrique est entraîné en rotation par l'organe moteur et s'étendant dans une direction perpendiculaire à celle des premiers organes suiveurs.

Afin de réduire les forces de frottement, les organes suiveurs peuvent avantageusement être constitués par des galets reposant sur les rampes et portés par des pattes faisant saillie sur la face arrière du miroir.

Par ailleurs, pour que le rétroviseur ait une forme très compacte, il est souhaitable que les premier et second éléments cylindriques soient coaxiaux.

Selon un mode de réalisation particulier, l'orifice axial du premier élément cylindrique comporte de préférence une première partie ayant en coupe transversale les mêmes dimensions que celles de l'orifice axial du second élément cylindrique, et une seconde partie ayant en coupe transversale des dimensions plus grandes que celles de la première partie et dans laquelle le second élément cylindrique est reçu.

Des dents équidistantes angulairement et ayant une face radiale sont réalisées de préférence dans la surface interne de la première partie de l'orifice axial du premier élément et dans la surface interne de l'orifice axial du second élément, les dents du premier élément ayant une orientation inverse de celle des dents du second élément.

Dans le mode de réalisation ci-dessus, il est préférable que la première rampe soit ménagée dans la surface interne de la seconde partie de l'orifice axial du premier élément cylindrique et que la seconde rampe le soit dans la surface périphérique externe du second élément cylindrique.

En outre, les pattes faisant saillie sur la face arrière du miroir s'étendent de préférence dans un espace annulaire ménagé entre les premier et second éléments cylindriques afin que le rétroviseur puisse être réalisé sous une forme encore plus compacte.

Selon une variante de réalisation, les premier et second éléments cylindriques sont de préférence identiques et placés coaxialement l'un à la suite de l'autre dans des positions inversées.

L'utilisation d'éléments identiques permet bien entendu de simplifier la structure du rétroviseur et d'abaisser le prix de revient de ce dernier.

Par ailleurs, des dents équidistantes angulairement et ayant une face radiale sont de préférence réalisées dans la surface interne des orifices des premier et second éléments cylindriques.

Dans le mode de réalisation selon la variante ci-dessus, des première et seconde rampes ménagées dans les surfaces périphériques externes des premier et second éléments cylindriques définissent chacune une boucle fermée ayant un point haut et un point bas situés dans deux positions diamétralement opposées, des organes suiveurs prenant appui sur lesdites rampes, respectivement en deux emplacements situés dans des positions diamétralement opposées, et se déplaçant sur elles lorsque les éléments cylindriques sont entraînés en rotation par l'organe moteur.

Par ailleurs, des pattes portant les organes suiveurs et faisant saillie sur la face arrière du miroir s'étendent de préférence le long des surfaces périphériques externes des premier et second éléments cylindriques, suivant une direction axiale.

Selon une caractéristique importante de l'invention, un organe d'accouplements relié à l'organe moteur est inséré dans les orifices des premier et second éléments cylindriques et comporte sur sa surface latérale des premiers cliquets orientés dans un sens et des seconds cliquets orientés dans le sens inverse, les premiers cliquets venant en prise uniquement avec les dents de l'un des éléments annulaires lorsque l'organe moteur entraîne en rotation l'organe d'accouplement dans un sens tandis que les seconds cliquets viennent en prise uniquement avec les dents de l'autre élément annulaire lorsque l'organe moteur entraîne en rotation l'organe d'accouplement en sens inverse.

Grâce à cet ensemble de dispositions, le pivotement du miroir sur les premier et second axes peut être assuré de façon sûre et régulière sous la seule commande de l'organe moteur.

Il est par ailleurs avantageux que les premier et second moyens d'entraînement et les moyens de commande soient logés dans un réceptacle cylindrique situé à l'intérieur du boîtier et comportant un fond pourvu d'orifices à travers lesquels s'étendent les pattes faisant saillie sur la face arrière du miroir.

En effet, ce réceptacle protège les deux éléments cylindriques tout en assurant leur maintien dans leurs positions respectives et permet par conséquent au rétroviseur de fonctionner en toute sécurité.

En ce qui concerne l'organe moteur, il est de préférence constitué par un moteur électrique monté dans un circuit comportant un inverseur de courant permettant une rotation du moteur dans les deux sens.

Le circuit du moteur peut avantageusement comprendre deux potentiomètres comportant chacun une piste conductrice et un curseur, les pistes conductrices étant situées sur les faces opposées d'un support annulaire fixe inséré entre les premier et second éléments cylindriques, tandis que les curseurs sont respectivement solidaires de ces éléments, plusieurs positions des curseurs correspondant à des positions de réglage sélectionnées du miroir étant mémorisées.

Grâce à une mémorisation des positions de réglage du miroir qui ont été sélectionnées par plusieurs conducteurs, ceux-ci peuvent positionner rapidement le miroir dans la position particulière qui leur convient en sélectionnant la position adéquate par enfoncement d'une touche particulière d'un clavier approprié.

Deux modes d'exécution de la présente invention seront décrits ci-après à titre d'exemples nullement limitatifs en référence aux dessins annexés dans lesquels :
- la figure 1 est une vue de face d'un rétroviseur selon l'invention, ce rétroviseur étant destiné à être fixé sur la portière gauche d'un véhicule, qui est représentée partiellement en traits mixtes ;
- la figure 2 est une vue de dessus schématique et avec arrachement du rétroviseur visible sur la figure 1 ;
- la figure 3 est une vue éclatée du mécanisme de réglage du miroir du rétroviseur visible sur les figures 1 et 2 ;
- la figure 4 est une vue de la face arrière de la plaque portant le miroir ;
- la figure 5 est une vue en perspective et en coupe du mécanisme de réglage en position montée, les pattes portant les galets étant omises pour plus de clarté du dessin ; et
- la figure 6 est une vue en perspective et en coupe d'une variante de réalisation du mécanisme de réglage.

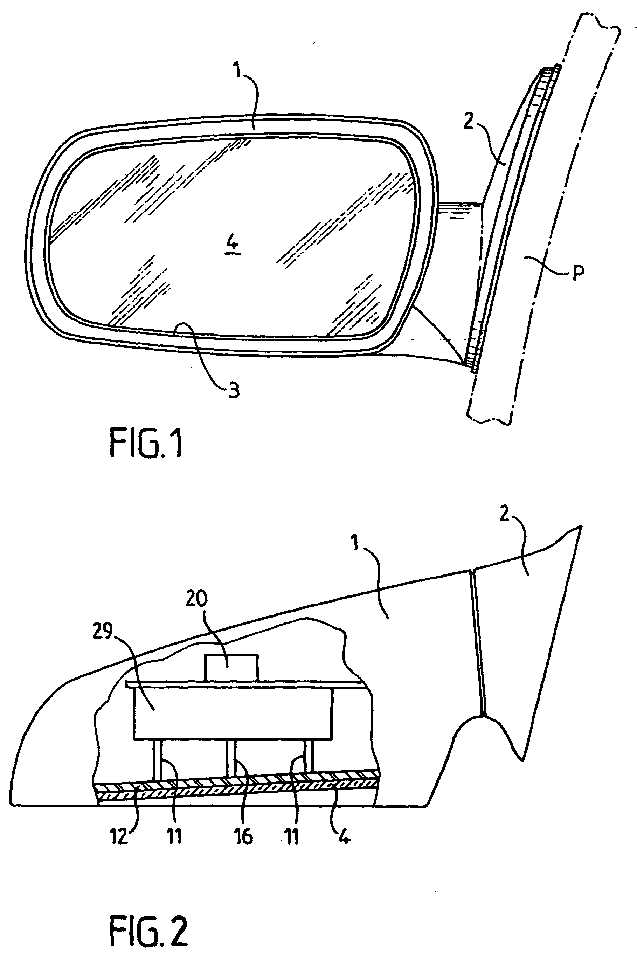

Le rétroviseur que l'on peut voir sur la figure 1 est destiné à être fixé sur la portière gauche P d'un véhicule tel qu'une automobile ou un poids lourd. Il pourrait cependant être installé sur la portière droite du véhicule moyennant certaines modifications structurelles pouvant être réalisées facilement par l'homme de l'art.

Ce rétroviseur comprend un boîtier 1 solidaire d'un support 2 destiné a été fixé d'une manière connue en soi sur la portière P.

Le boîtier 1, qui peut être réalisé en métal ou en matière plastique, comporte une entrée 3 fermée par un miroir 4.

Comme cela ressortira de la description qui sera donnée ci-après, le boîtier 1 renferme des premiers moyens d'entraînement 5 destinés à faire pivoter le miroir 4 sur un premier axe, des seconds moyens d'entraînement 6 destinés à faire pivoter ledit miroir sur un second axe perpendiculaire au premier axe, et des moyens de commande 7 pour actionner sélectivement les premier et second moyens d'entraînement 5, 6 et permettre au conducteur du véhicule d'orienter le miroir 4 dans la positon adéquate.

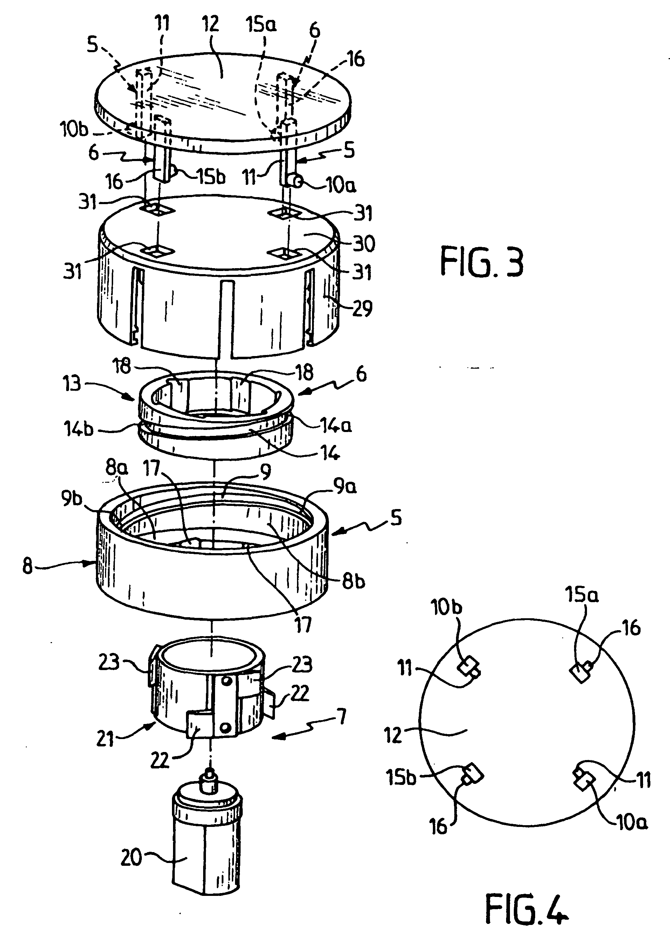

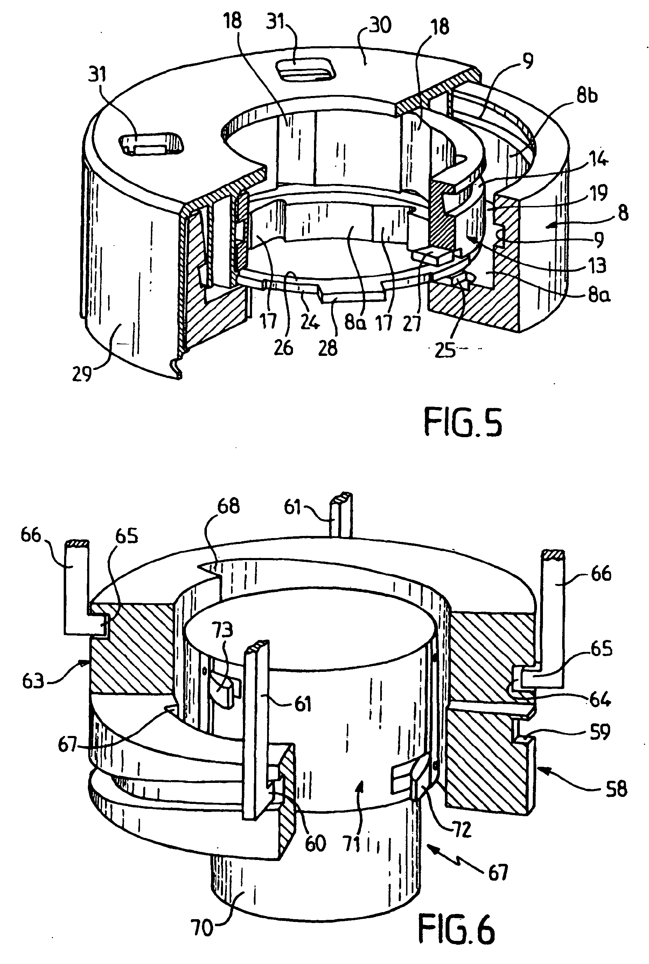

Les premiers moyens 5 sont particulièrement bien visibles sur les figures 3 et 5. Ils comprennent tout d'abord un premier élément cylindrique 8 monté rotatif dans le boiter 1 et comportant une première rampe 9 définissant une boucle fermée ayant un point haut 9a et un point bas 9b situés dans deux positions diamétralement opposées.

Ils comprennent également deux galets 10a, 10b situés chacun à l'extrémité libre d'une patte 11 portée par une plaque circulaire 12 fixée sur la face arrière du miroir 4.

Les galets 10a, 10b prennent appui sur la première rampe 9 en deux emplacements diamétralement opposés et sont aptes à rouler sur cette rampe lorsque le premier élément 8 est entraîné en rotation sur son axe.

En se référant à la figure 4, on remarquera que les galets 10a, 10b sont tournés vers la périphérie de la plaque circulaire 12 et que leurs axes de rotation s'étendent coaxialement avec un diamètre de cette dernière.

Les seconds moyens d'entraînement 6, qui sont également bien visibles sur les figures 3 et 5, comprennent tout d'abord un second élément cylindrique 13 monté à rotation dans le premier élément 8 et comportant une seconde rampe 14 définissant une boucle fermée ayant un point haut 14a et un point bas 14b situés dans deux positions diamétralement opposés.

Ils comprennent également deux galets 15a, 15b situés chacun à l'extrémité libre d'une patte 16 portée par la plaque 12 fixée contre le miroir 4.

Les galets 15a, 15b sont identiques aux galets 10a, 10b. Ils prennent appui sur la seconde rampe 14 en deux emplacements diamétralement opposés et sont aptes à rouler sur cette rampe lorsque le second élément 13 est entraîné en rotation sur son axe.

Comme le montre la figure 4, les galets 15a, 15b sont tournés l'un vers l'autre, contrairement aux galets 10a, 10b qui sont dirigés vers la périphérie de la plaque 12.

La figure 4 montre également que les pattes 16 sont symétriques par rapport au diamètre qui est coaxial avec les axes de rotation des galets 10a, 10b.

En revenant à la figure 3, on remarquera que le premier élément cylindrique 8 possède un orifice axial comportant une première partie 8a ayant en coupe transversale les mêmes dimensions que celles de l'orifice axial du second élément cylindrique 13, et une seconde partie 8b ayant en coupe transversale des dimensions plus grandes que celles de la partie 8a et dans laquelle est reçu le second élément 13.

Des dents 17 équidistantes angulairement, ayant une face radiale et s'étendant axialement sont formées dans la surface interne de la partie 8a tandis que la première rampe 9 est ménagée dans la surface interne de la partie 8b.

Des dents 18 sont également formées dans la surface interne de l'orifice axial du second élément cylindrique 13. Ces dents sont identiques aux dents 17 mais leur orientation est opposée à celle de ces dernières.

La seconde rampe 14 est quant à elle ménagée dans la surface périphérique externe du second élément 13.

En se référant maintenant à la figure 5, on remarquera que le second élément 13, lorsqu'il est en place dans la seconde partie 8b du premier élément 8, ménage un espace annulaire 19 avec la surface interne de cette seconde partie.

Les deux pattes 11 et les deux pattes 16 s'étendent dans cet espace dans lequel débouchent la rampe 9 contre laquelle s'appuient les galets 10a, 10b et la rampe 14 contre laquelle s'appuient les galets 15a, 15b.

Les moyens de commande 7 sont prévus pour faire tourner sélectivement les premier et second éléments cylindriques 8 et 13. Ils comprennent un moteur électrique 20 monté dans un circuit électrique (non représenté) comportant un inverseur de courant. Ainsi, en actionnant judicieusement l'inverseur, un utilisateur peut faire tourner l'arbre de sortie du moteur dans l'un ou l'autre sens.

Les moyens de commande 7 comprennent également un organe d'accouplement 21 solidaire en rotation de l'arbre de sortie du moteur 20 et inséré dans les orifices axiaux des éléments cylindriques 8 et 13.

Comme le montre clairement la figure 3, l'organe d'accouplement 21 comporte sur sa surface latérale cylindrique des premiers cliquets 22 orientés dans le sens des aiguilles d'une montre et des seconds cliquets 23 orientés dans le sens inverse.

Les premiers cliquets 22 sont situés à la partie inférieure de la surface latérale de l'organe 21 de façon à être à la hauteur des dents 17 de la partie 8a de l'orifice axial du premier élément cylindrique 8.

Les seconds cliquets 23 sont quant à eux situés à la partie supérieure de la surface latérale de l'organe 21 de façon à être à la hauteur des dents 18 de l'orifice axial du second élément cylindrique 13.

Lorsque l'arbre de sortie du moteur 20 tourne dans le sens des aiguilles d'une montre, il entraîne avec lui l'organe d'accouplement 21. Les cliquets 22 de celui-ci viennent alors en prise avec les dents 17 de l'élément cylindrique 8 qui est donc entraîné en rotation dans le même sens.

Par suite, les galets 10a, 10b roulent sur la rampe 9 et permettent au miroir 4 de pivoter sur le premier axe.

Pendant que l'organe d'accouplement 21 tourne dans le sens des aiguilles d'une montre, ses cliquets 23 se déplacent sur les dents 18 de l'élément cylindrique 13 sans pouvoir venir en prise avec elles.

L'élément cylindrique 13 demeure par conséquent immobile.

Si maintenant l'arbre de sortie du moteur 20 tourne dans le sens inverse des aiguilles d'une montre, les cliquets 23 de l'organe d'accouplement 21 viennent en prise avec les dents 18 de l'élément cylindrique 13. Celui-ci est donc entraîné en rotation, ce qui permet aux galets 15a, 15b de rouler sur la rampe 14 et de faire pivoter le miroir 4 sur le second axe.

Pendant ce temps, les cliquets 22 de l'organe d'accouplement 21 se déplacent sur les dents 17 de l'élément cylindrique 8 sans pouvoir venir en prise avec elles.

L'élément cylindrique 8 reste donc immobile.

Dans le mode de réalisation qui vient d'être décrit, le circuit électrique du moteur 20 comprend un premier potentiomètre comportant une piste conductrice 24 et un curseur 25 et un second potentiomètre comportant une pise conductrice 26 et un curseur 27.

Comme le montre la figure 5, les pistes conductrices 24, 26 sont situées sur les faces opposées d'un support annulaire 28 immobilisé entre les éléments cylindriques 8, 13, tandis que les curseurs 25, 27 sont solidaires le premier de l'élément 8 et le second de l'élément 13.

Grâce aux deux potentiomètres montés dans le circuit électrique du moteur 20, plusieurs positions de réglage du rétroviseur définies par des positions prédéterminées des curseurs 25, 27 peuvent être mémorisées, ces positions correspondant à des orientations particulières du miroir 4.

Ainsi, les utilisateurs habituels du véhicule peuvent régler le rétroviseur dans la position adéquate en sélectionnant la position mémorisée particulière qu'ils ont eux-mêmes mise en mémoire.

Ce réglage peut être effectué très rapidement, par exemple en enfonçant une touche particulière d'un clavier installé dans le véhicule à la portée du conducteur.

Pour être complet, on précisera que les éléments cylindriques 8 et 13 sont logés dans un réceptacle 29 situé à l'intérieur du boîtier 1. Le réceptacle 29, qui est cylindrique, comporte un fond 30 pourvu d'orifices 31 à travers lesquels s'étendent les pattes 11 et 16 solidaires de plaque 12.

La figure 6 représente de façon schématique un autre mécanisme de réglage du miroir d'un rétroviseur selon l'invention.

Ce mécanisme de réglage présente de nombreuses similitudes avec celui qui vient d'être décrit en référence aux figures 1 à 5.

Il comprend en effet un premier élément cylindrique rotatif 58 comportant une première rampe 59 définissant une boucle fermée ayant un point haut et un point bas, deux organes suiveurs 60 prenant appui sur la première rampe 59 en deux emplacements diamétralement opposés, un second élément cylindrique rotatif 63 comportant une seconde rampe 64 définissant à son tour une boucle fermée ayant un point haut et un point bas, deux organes suiveurs 65 prenant appui sur la seconde rampe 64 en deux emplacements diamétralement opposés, et des moyens de commande 67 pour faire tourner sélectivement les premier et second éléments cylindriques 58, 63.

Les éléments cylindriques 58, 63 sont identiques et disposés coaxialement l'un à la suite de l'autre dans des positions inversées.

Ils comportent des dents 67, 68 équidistantes angulairement et ménagées verticalement, respectivement dans la surface interne de leur orifice axial.

Comme le montre la figure 6, ces dents comportent une face radiale. Comme les éléments 58,63 sont disposés dans des positions inversées, leurs dents respectives ont évidemment des orientations inverses.

On notera ici que les organes suiveurs 60 sont prévus à l'extrémité inférieure de deux pattes 61 solidaires de la face arrière du miroir (non représenté sur la figure 6) tandis que les organes suiveurs 65 sont prévus à l'extrémité inférieure de deux pattes 66 également solidaires de la face arrière du miroir.

Comme les pattes 11 et 16 du premier mode de réalisation, les pattes 61 et 66 sont disposées suivant deux diamètres perpendiculaires.

Etant donné que les rampes 59, 64 sont ménagées dans les surfaces périphériques externes des éléments cylindriques 58, 63, les pattes 61, 66 s'étendent le long de ces surfaces, selon une direction axiale.

Les moyens de commande 67 comprennent un moteur électrique 70 monté dans un circuit électrique semblable à celui du moteur 20 du rétroviseur décrit en référence aux figures 1 à 5 et un organe d'accouplement 71 solidaire en rotation de l'arbre de sortie du moteur 70.

L'organe d'accouplement 71 est inséré dans les orifices axiaux des éléments cylindriques 58 et 63 et comporte sur sa surface latérale des premiers cliquets 72 orientés dans le sens des aiguilles d'une montre et des seconds cliquets 73 orientés dans le sens inverse.

Les cliquets 72 sont situés à la hauteur des dents 67 de l'élément cylindrique 58 tandis que les cliquets 73 sont situés à la hauteur des dents 68 de l'élément cylindrique 63.

Etant donné que les cliquets 72 et 73 exercent la même fonction que les cliquets 22 et 23 de l'organe d'accouplement 21 du rétroviseur décrit en référence aux figures 1 à 5, on s'abstiendra de donner ici une description du fonctionnement du mécanisme de réglage représenté sur la figure 6.

Il ressort de ce qui précède que la présente invention permet de réaliser un rétroviseur comportant un mécanisme de réglage compact, ne comportant qu'un seul organe moteur et dont le fonctionnement est fiable.

## Revendications

1. Rétroviseur pour véhicule, notamment pour automobile, comprenant un boîtier (1) comportant une entrée (3) fermée par un miroir (4), des premiers moyens d'entraînement (5) pour faire pivoter le miroir sur un premier axe, des seconds moyens d'entraînement (6) pour faire pivoter ledit miroir sur un second axe perpendiculaire au premier axe, et un moteur électrique (20, 70) pour entraîner sélectivement en rotation les premier et second moyens d'entraînement, **caractérisé en ce que** les premiers moyens d'entraînement (5) comprennent un premier élément cylindrique (8 ; 58) monté à rotation et comportant une première rampe (9 ; 59) définissant une boucle fermée ayant un point haut (9a) et un point bas (9b) situés dans deux positions diamétralement opposées, et deux premiers organes suiveurs (10a, 10b ;60) prenant appui sur la première rampe en deux emplacements situés dans des positions diamétralement opposées et se déplaçant sur ladite première rampe lorsque le premier élément cylindrique (8 ; 58) est entraîné en rotation par le moteur électrique (20 ; 70).

2. Rétroviseur selon la revendication 1, **caractérisé en ce que** les seconds moyens d'entraînement (6) comprennent un second élément cylindrique (13 ; 63) monté à rotation et comportant une seconde rampe (14 ; 64) définissant une boucle fermée ayant un point haut (14a) et un point bas (14b) situés dans deux positions diamétralement opposées, et deux seconds organes suiveurs (15a, 15b ; 65) prenant appui sur la deuxième rampe en deux emplacements situés dans des positions diamétralement opposées, se déplaçant sur ladite seconde rampe lorsque le second élément cylindrique (13 ; 63) est entraîné en rotation par le moteur électrique (20 ; 70) et s'étendant dans une direction perpendiculaire à celle des premiers organes suiveurs (10a, 10b ; 60).

3. Rétroviseur selon la revendication 2, **caractérisé en ce que** les organes suiveurs (10a, 10b, 15a, 15b) sont constitués par des galets reposant sur les rampes (9, 14) et portés par des pattes (11, 16) faisant saillie sur la face arrière du miroir (4).

4. Rétroviseur selon la revendication 2 ou 3, **caractérisé en ce que** les premier et second éléments cylindriques (8, 13 ; 58, 63) sont coaxiaux.

5. Rétroviseur selon la revendication 4, **caractérisé en ce que** l'orifice axial du premier élément cylindrique (8) comporte une première partie (8a) ayant en coupe transversale les mêmes dimensions que celles de l'orifice axial du second élément cylindrique (13), et une seconde partie (8b) ayant en coupe transversale des dimensions plus grandes que celles de la première partie (8a) et dans laquelle le second élément cylindrique (13) est reçu.

6. Rétroviseur selon la revendication 5, **caractérisé en ce que** des dents (17, 18) équidistantes angulairement et ayant une face radiale sont réalisées dans la surface interne de la première partie (8a) de l'orifice axial du premier élément (8) et dans la surface interne de l'orifice axial du second élément (13), les dents (17) du premier élément (8) ayant une orientation inverse de celle des dents (18) du second élément (13).

7. Rétroviseur selon la revendication 5 ou 6, **caractérisé en ce que** la première rampe (9) est ménagée dans la surface interne de la seconde partie (8b) de l'orifice axial du premier élément cylindrique (8) tandis que la seconde rampe (14) est ménagée dans la surface périphérique externe du second élément cylindrique (13).

8. Rétroviseur selon l'une quelconque des revendications 3 à 7, **caractérisé en ce que** les pattes (11, 16) faisant saillie sur la face arrière du miroir (4) s'étendent dans un espace annulaire (19) ménagé entre les premier et second éléments cylindriques (8, 13).

9. Rétroviseur selon la revendication 2, **caractérisé en ce que** les premier et second éléments cylindriques (58, 63) sont identiques et placés coaxialement l'un à la suite de l'autre dans des positions inversées.

10. Rétroviseur selon la revendication 9, **caractérisé en ce que** des dents (67, 68) équidistantes angulairement et ayant une face radiale sont réalisées dans la surface interne des orifices des premier et second éléments cylindriques (58, 63).

11. Rétroviseur selon la revendication 9 ou 10, **caractérisé en ce que** des première et seconde rampes (59, 64) ménagées dans les surfaces périphériques externes des premier et second éléments cylindriques (58, 63) définissent chacune une boucle fermée ayant un point haut et un point bas situés dans deux positions diamétralement opposées, des organes suiveurs (60, 65) prenant appui sur lesdites rampes, respectivement en deux emplacements situés dans des positions diamétralement opposées, et se déplaçant sur elles lorsque les éléments cylindriques sont entraînés en rotation par le moteur électrique (70).

12. Rétroviseur selon la revendication 11, **caractérisé en ce que** les organes suiveurs (60, 65) sont portés par des pattes (61, 66) faisant saillie sur la face arrière du miroir (4) et s'étendant le long des surfaces périphériques externes des premier et second éléments cylindriques (58, 63), suivant une direction axiale.

13. Rétroviseur selon l'une quelconque des revendications 1 à 12, **caractérisé en ce qu'**un organe d'accouplement (21 ; 71) relié au moteur électrique (20 ; 70) est inséré dans les orifices des premier et second éléments cylindriques (8, 13 ; 58, 63) et comporte sur sa surface latérale des premiers cliquets (22 ; 72) orientés dans un sens et des seconds cliquets (23 ; 73) orientés dans le sens inverse, les premiers cliquets venant en prise uniquement avec les dents (17 ; 67) de l'un (8 ; 58) des éléments annulaires lorsque le moteur électrique (20 ; 70) entraîne en rotation l'organe d'accouplement (21 ; 71) dans un sens tandis que les seconds cliquets viennent en prise uniquement avec les dents (18 ; 68) de l'autre élément annulaire (13 ; 63) lorsque le moteur électrique entraîne en rotation l'organe d'accouplement en sens inverse.

14. Rétroviseur selon l'une quelconque des revendications 1 à 13, **caractérisé en ce que** les premier et second moyens d'entraînement (5, 6) et les moyens de commande (7) sont logés dans un réceptacle cylindrique (29) situé à l'intérieur du boîtier (1) et comportant un fond (30) pourvu d'orifices (31) à travers lesquels s'étendent les pattes (11 ; 16) faisant saillie sur la face arrière du miroir (4).

15. Rétroviseur selon l'une quelconque des revendications précédentes, **caractérisé en ce que** le moteur électrique (20, 70) est monté dans un circuit comportant un inverseur de courant permettant de le faire tourner dans les deux sens.

16. Rétroviseur selon la revendication 15, **caractérisé en ce que** le circuit du moteur comprend deux potentiomètres comportant chacun une piste conductrice (24 ; 26) et un curseur (25 ; 27), les pistes conductrices (24 ; 26) étant situées sur les faces opposées d'un support fixe (28) inséré entre les premier et second éléments cylindriques (8 ; 13), tandis que les curseurs (25 ; 27) sont respectivement solidaires de ces éléments, plusieurs positions des curseurs correspondant à des positions de réglage sélectionnées du miroir (4) étant mémorisées.

## Patentansprüche

1. Rückspiegel für Fahrzeuge, insbesondere für Automobile, mit einem Gehäuse (1), das eine Einführung (3) aufweist, die durch einen Spiegel (4) verschlossen ist, sowie erste Antriebsmodule (5), um den Spiegel um eine erste Achse schwenken zu lassen, zweite Antriebsmodule (6), um jenen Spiegel um eine zweite, zur ersten Achse senkrechte Achse schwenken zu lassen, sowie einen Elektromotor (20, 70), um wahlweise die ersten oder zweiten Antriebsmodule drehbar anzutreiben,
**dadurch gekennzeichnet, daß** die ersten Antriebsmodule (5) ein erstes zylindrisches, drehbar gelagertes Element (8; 58) aufweisen, mit einer ersten Rampe (9; 59), die eine geschlossene Schleife mit einem Hoch-(9a) und einem Tiefpunkt (9b) bildet, die sich an zwei diametral gegenüberliegenden Stellen befinden, sowie zwei ersten Mitnahmeelementen (10a, 10b; 60), die sich auf der ersten Rampe an zwei sich diametral gegenüberliegenden Stellen abstützen und sich auf jener ersten Rampe verschieben, wenn das erste zylindrische Element (8; 58) durch den Elektromotor (20; 70) in Drehung versetzt wird.

2. Rückspiegel nach Anspruch 1,
**dadurch gekennzeichnet, daß** die zweiten Antriebsmodule (6) ein zweites zylindrisches Element (13; 63) umfassen, das drehbar gelagert ist und eine zweite Rampe (14; 64) trägt, die eine geschlossene Schleife mit einem Hoch- (14a) und einem Tiefpunkt (14b) bildet, die sich an zwei diametral gegenüberliegenden Stellen befinden, sowie zwei zweiten Mitnahmeelementen (15a, 15b; 65), die sich auf der zweiten Rampe an zwei sich diametral gegenüberliegenden Stellen abstützen und sich auf jener zweiten Rampe verschieben, wenn das zweite zylindrische Element (13; 63) durch den Elektromotor (20; 70) in Drehung versetzt wird und die sich in einer zu den ersten Mitnahmeelementen (10a, 10b; 60) senkrechten Richtung erstrecken.

3. Rückspiegel nach Anspruch 2,
**dadurch gekennzeichnet, daß** die Mitnahmeelemente (10a, 10b, 15a, 15b) aus auf den Rampen (9, 14) aufsitzenden Laufrollen bestehen und von Pratzen (11, 16) getragen werden, die aus der Rückseite des Spiegels (4) hervorragen.

4. Rückspiegel nach Anspruch 2 oder 3,
**dadurch gekennzeichnet, daß** die ersten und zweiten zylindrischen Elemente (8, 13; 58, 63) koaxial angeordnet sind.

5. Rückspiegel nach Anspruch 4,
**dadurch gekennzeichnet, daß** die axiale Öffnung des ersten zylindrischen Elements (8) einen ersten Abschnitt (8a) mit einem Querschnitt mit denselben Abmessungen wie die Öffnung des zweiten zylindrischen Elements (13) aufweist und daß ein zweiter Abschnitt (8b) einen Querschnitt mit größeren Dimensionen als jenen des ersten Abschnitts (8a) aufweist und daß in jenem das zweite zylindrische Element (13) aufgenommen wird.

6. Rückspiegel nach Anspruch 5,
**dadurch gekennzeichnet, daß** die Zahnlücken (17, 18) in gleicher Winkelteilung und mit einer radialen Flanke an der Innenseite des ersten Abschnitts (8a) der axialen Bohrung des ersten Elements (8) und an der Innenseite der axialen Bohrung des zweiten Elements (13) ausgebildet sind und daß die Mitnehmer (17) des ersten Elements (8) eine jenen Zahnlücken (18) des zweiten Elements entgegengesetzte Orientierung aufweisen.

7. Rückspiegel nach Anspruch 5 oder 6,
**dadurch gekennzeichnet, daß** die erste Rampe (9) an der Innenseite des zweiten Abschnitts (8b) der axialen Bohrung des ersten zylindrischen Elements (8) angeordnet ist, während die zweite Rampe (14) am Außenumfang des zweiten zylindrischen Elements (13) ausgeführt ist.

8. Rückspiegel nach einem der Ansprüche 3 bis 7,
**dadurch gekennzeichnet, daß** die Pratzen (11, 16) aus der Rückseite des Spiegels (4) herausragen und sich durch einen zwischen dem ersten und zweiten zylindrischen Element (8, 13) angeordneten Ringraum (19) erstrecken.

9. Rückspiegel nach Anspruch 2,
**dadurch gekennzeichnet, daß** die ersten und zweiten zylindrischen Elemente (58, 63) identisch sind und koaxial hintereinander in inverser Lage angeordnet sind.

10. Rückspiegel nach Anspruch 9,
**dadurch gekennzeichnet, daß** die Zahnlücken (67, 68) in gleicher Winkelteilung und mit einer radialen Flanke an der Innenfläche der Bohrungen des ersten und zweiten zylindrischen Elements (58, 63) ausgeführt sind.

11. Rückspiegel nach Anspruch 9 oder 10,
**dadurch gekennzeichnet, daß** die auf den Umfangsflächen des ersten und zweiten zylindrischen Elements (58, 63) angeordneten ersten und zweiten Rampen (59, 64) jeweils eine geschlossene Schleife mit einem Hoch- und einem Tiefpunkt bilden, die sich an zwei diametral gegenüberliegenden Stellen befinden und sich Mitnehmerelemente (60, 65) jeweils an zwei sich diametral gegenüberliegenden Stellen abstützen und sich auf den Rampen verschieben, wenn die zylindrischen Elemente durch den Elektromotor (70) in Drehung versetzt werden.

12. Rückspiegel nach Anspruch 11,
**dadurch gekennzeichnet, daß** die Mitnehmerelemente (60, 65) von Pratzen (61, 66) gehalten werden, die aus der Rückseite des Spiegels (4) hervorragen und sich längs der Umfangsflächen des ersten und zweiten zylindrischen Elements (58, 63) in axialer Richtung erstrecken.

13. Rückspiegel nach einem der Ansprüche 1 bis 12,
**dadurch gekennzeichnet, daß** ein mit dem Elektromotor (20; 70) verbundenes Kupplungsorgan (21; 71) in die Bohrungen des ersten und zweiten zylindrischen Elements (8, 13; 58, 63) eingefügt ist und an seiner Seitenfläche erste Klinken (22; 72) aufweist, die in einem Sinne ausgerichtet sind, sowie zweite Klinken (23; 73), die in umgekehrtem Sinne ausgerichtet sind und die ersten Klinken ausschließlich mit den Zahnlücken (17; 67) des einen (8; 58) Ringelements in Eingriff kommen, wenn der Elektromotor (20; 70) das Kupplungsorgan (21; 70) in einer Richtung in Rotation versetzt, während die zweiten Klinken nur dann mit den Zahnlücken (18; 68) des anderen Ringelements (13; 63) in Eingriff kommen, wenn der Elektromotor das Kupplungsorgan in inversem Sinn in Drehung versetzt.

14. Rückspiegel nach einem der Ansprüche 1 bis 13,
**dadurch gekennzeichnet, daß** die ersten und zweiten Antriebsmodule (5, 6) und die Steuermodule (7) in einem sich im Inneren des Gehäuses (1) befindlichen zylindrischen Behälters (29) untergebracht sind, der einen Boden (30) aufweist, in dem Öffnungen (31) vorgesehen sind, durch die sich die Pratzen (11; 16) erstrecken, die aus der Rückseite des Spiegels (4) herausragen.

15. Rückspiegel nach einem der vorhergehenden Ansprüche,
**dadurch gekennzeichnet, daß** der Elektromotor (20, 70) in einem Schaltkreis liegt, der einen Stromwender aufweist, der ihn in beiden Drehrichtungen antreiben kann.

16. Rückspiegel nach Anspruch 15,
**dadurch gekennzeichnet, dass** der Motorschaltkreis zwei Potentiometer aufweist, die jeweils eine Leiterbahn (24; 26) und einen Schieber (25; 27) beinhalten, und dass die Leiterbahnen (24; 26) auf gegenüberliegenden Stirnflächen eines festen Trägers (28) angeordnet sind, der zwischen dem ersten und dem zweiten zylindrischen Element (8; 13) eingefügt ist, während die Schieber (25; 27) mit diesen Elementen jeweils fest verbunden sind und mehrere Schieberstellungen ausgewählten und abgespeicherten Regelstellungen des Spiegels (4) entsprechen.

## Claims

1. A vehicle rear view mirror, notably for an automobile, comprising a casing (1) having an inlet (3) sealed by a mirror (4), a first drive means (5) for pivoting the mirror on a first axis, a second drive means (6) for pivoting said mirror on a second axis perpendicular to the first axis, and an electric motor (20;70) for selectively driving the first and second drive means in rotation, **characterized in that** the first drive means (5) comprise a first cylindrical member (8;58) rotary mounted and comprising a first ramp (9;59) defining a closed loop having a high point (9a) and a low point (9b) situated in two diametrically opposite positions and two first followers (10a, 10b; 60) bearing on the first ramp in two locations situated in diametrically opposite positions and moving along said first ramp when the first cylindrical member (8;58) is driven in rotation by the electric motor (20;70).

2. The rear view mirror according to claim 1, **characterized in that** the second drive means (6) further comprises a second cylindrical member (13;63) rotary mounted and comprising a second ramp (14;64) defining a closed loop having a high point (14a) and a low point (14b) situated in two diametrically opposite positions and two second followers (15a,15b;65) bearing on the second ramp in two locations situated in diametrically opposite positions, said two second followers moving along said second ramp when the second cylindrical member (13;63) is driven in rotation by the electric motor (20;70) and extending in a direction perpendicular to that of the first followers (10a, 10b ;60).

3. The rear view mirror according to claim 2, **characterized in that** the followers (10a, 10b, 15a, 15b) consist of rollers resting on the ramps (9,14) and carried by legs (11,16) projecting from the rear face of the mirror (4).

4. The rear view mirror according to claim 2 or 3, **characterized in that** the first and second cylindrical members (8,13 ; 58,63) are coaxial.

5. The rear view mirror according to claim 4, **characterized in that** the axial bore of the first cylindrical member (8) comprises a first part (8a) having in cross section the same dimensions as those of the axial bore of the second cylindrical member (13) and a second part (8b) having in cross section dimensions larger than those of the first part (8a) and in which the second cylindrical member (13) is received.

6. The rear view mirror according to claim 5, **characterized in that** angularly equidistant teeth (17,18) having a radial face are formed in the inner surface of the first part (8a) of the axial bore of the first member (8) and in the inner surface of the axial bore of the second member (13), the teeth (17) of the first member (8) having an orientation opposite that of the teeth (18) of the second member (13).

7. The rear view mirror according to claim 5 or 6, **characterized in that** the first ramp (9) is provided in the inner surface of the second part (8b) of the axial bore of the first cylindrical member (8), while the second ramp (14) is provided in the outer peripheral surface of the second cylindrical member (13).

8. The rear view mirror according to any of claims 3 to 7, **characterized in that** the legs (11,16) projecting from the rear face of the mirror (4) extend in an annular space (19) provided between the first and second cylindrical members (8,13).

9. The rear view mirror according to claim 2, **characterized in that** the first and second cylindrical members (58,63) are identical and placed coaxially one after the other in opposite positions.

10. The rear view mirror according to claim 9, **characterized in that** angularly equidistant teeth (67,68) having a radial face are formed in the inner surface of the bores of the first and second cylindrical members (58,63).

11. The rear view mirror according to claim 9 or 10, **characterized in that** first and second ramps (59,64) provided in the outer peripheral surfaces of the first and second cylindrical members (58,63) each define a closed loop having a high point and a low point situated in two diametrically opposite positions, followers (60,65) bearing on said ramps respectively in two locations situated in diametrically opposite positions and moving along them when the cylindrical members are driven in rotation by the electric motor (70).

12. The rear view mirror according to claim 11, **characterized in that** the followers (60,65) are carried by legs (61,66) projecting from the rear face of the mirror (4) and extending along the outer peripheral surfaces of the first and second cylindrical members (58,63) following an axial direction.

13. The rear view mirror according to any of claims 1 to 12, **characterized in that** a coupling device (21;71) connected to the electric motor (20;70) is inserted in the bores of the first and second cylindrical members (8,13;58,63) and comprises on its lateral surface first pawls (22;72) oriented in one direction and second pawls (23;73) oriented in the opposite direction, the first pawls engaging solely with the teeth (17;67) of one (8;58) of the annular members when the electric motor (20;70) drives the coupling device (21;71) in rotation in one direction, while the second pawls engage solely with the teeth (18;68) of the other annular member (13;63) when the electric motor drives the coupling device in rotation in the opposite direction.

14. The rear view mirror according to any of claims 1 to 13, **characterized in that** the first and second drive means (5,6) and the control means (7) are housed in a cylindrical receptable (29) situated inside the casing (1) and comprising a back (30) provided with openings (31) through which the legs (11;16) projecting from the rear face of the mirror (4) extend.

15. The rear view mirror according to any of the preceding claims, **characterized in that** the electric motor (20;70) is mounted in a circuit comprising a current inverter for causing it to rotate in both directions.

16. The rear view mirror according to claim 15, **characterized in that** the circuit of the motor includes two potentiometers, each comprising a conductive track (24;26) and a slider (25;27), the conductive tracks (24;26) being situated on the opposite faces of a fixed support (28) inserted between the first and second cylindrical members (8;13), while the sliders (25;27) are respectively integral with said members, several positions of the sliders corresponding to selected adjustment positions of the mirror (4) being memorized.
